# EUROPÄISCHE PATENTSCHRIFT

(11) **EP 0 447 674 B1**
(45) Veröffentlichungstag und Bekanntmachung des Hinweises auf die Patenterteilung: **31.03.1993**
(21) Anmeldenummer: 90125385.6
(22) Anmeldetag: 22.12.1990
(51) Int. Cl.: A47C 3/30, F16F 9/02

(54) **Längenverstellbare Gasfeder**
Length adjustable gasspring
Ressort pneumatique de longeur réglable

(30) Priorität: 21.03.1990 DE 4009034
(43) Veröffentlichungstag der Anmeldung: 25.09.1991
(73) Patentinhaber: SUSPA COMPART Aktiengesellschaft, D-90518 Altdorf (DE)
(72) Erfinder: Bauer, Hans Jürgen, W-8503 Altdorf (DE); Bauer, Hans-Peter, W-8503 Altdorf (DE); Meyer, Jochen, W-8587 Creussen (DE); Späthe, Jürgen, W-8587 Creussen (DE); Wolf, Herbert, W-8500 Nürnberg (DE)
(74) Vertreter: Rau, Manfred, Dr. Dipl.-Ing.

(56) Entgegenhaltungen:
- DE-A- 3 102 276
- DE-U- 8 630 918

## Beschreibung

Die Erfindung betrifft eine längenverstellbare Gasfeder nach dem Oberbegriff des Anspruches 1.

Derartige Gasfedern sind beispielsweise aus der DE-PS 18 12 282 (entsprechend US-PS 3 656 593) und einer großen Zahl späterer Druckschriften mit zahlreichen Varianten bekannt. Wegen ihrer vorteilhaften Eigenschaften insbesondere als längenverstellbare Hubvorrichtungen in Stuhlsäulen und dgl. haben sich diese Gasfedern in der Praxis außerordentlich bewährt. Zwischen Innenrohr und Außenrohr ist ein schmaler Ringraum als Überströmraum ausgebildet. Innenrohr und Außenrohr bestehen aus Stahl, und zwar insbesondere aus nahtlos gezogenen Stahlrohren, wobei es zur Erzeugung einer einwandfreien Gleitfläche für den Kolben und die in diesem befindliche Dichtung die Innenwand des Innenrohres noch einer gesonderten Oberflächenbearbeitung bedarf.

Der Erfindung liegt die Aufgabe zugrunde, den Material- und Bearbeitungsaufwand für die Gasfeder im Bereich ihres Innenrohres zu verringern.

Diese Aufgabe wird erfindungsgemäß durch die Merkmale im Kennzeichnungsteil des Anspruches 1 gelöst. Dadurch daß das Innenrohr aus Kunststoff besteht, kann dieses in einem Herstellungsgang hergestellt werden, bedarf also keiner Nachbearbeitung. Praktisch alle qualitativ hochwertigen Kunststoffe haben glänzend harte Oberflächen, so daß eine irgendwie geartete Bearbeitung der Innenwand des Innenrohres nicht mehr notwendig ist. Die zahlreichen auf dem Umfang der Außenwand des Innenrohres verteilten kleinen Kanäle bilden einen ausreichend großen Überströmquerschnitt. Auch diese Kanäle können im Herstellungsgang des Innenrohres mit hergestellt werden.

Insbesondere durch die Weiterbildung nach Anspruch 2 wird erreicht, daß das Innenrohr aus Kunststoff dünnwandig ausgebildet werden kann, da es durch die Anlage am Außenrohr formstabil ist, also nicht bei Auslenkbewegungen der Kolbenstange und damit des Kolbens radial nach außen gedrückt werden kann. Dadurch wird eine Art Verbundteil aus Außenrohr und Innenrohr geschaffen. Gemäß Anspruch 3 deckt die Innenrand des Außenrohres die einzelnen Kanäle ab, was insbesondere bei der Ausgestaltung nach Anspruch 2 der Fall ist. Diese Abdeckung muß nicht derart sein, daß benachbarte Kanäle gasdicht gegeneinander abgetrennt sind. Vielmehr soll sichergestellt sein, daß die zwischen benachbarten Kanälen verbliebenen Stege, also Außenwand-Bereiche des Innenrohres sich in ausreichendem Umfang gegen die Innenwand des Außenrohres abstützen.

Durch die Weiterbildung nach Anspruch 4 wird zum Ausdruck gebracht, daß die Wanddicke des Innenrohres sich in einem Bereich bewegt, wie er bei der Ausbildung der Innenrohre aus Stahl auch gegeben ist.

Die einzelnen Kanäle haben nach Anspruch 5 nur eine außerordentlich geringe Tiefe. Die ausreichenden Gesamtquerschnitte für die Überströmung des Gases wird durch die große Zahl der Kanäle gebildet.

Durch Anspruch 6 wird sichergestellt, daß die einzelnen Kanäle bezogen auf die Wanddicke nur eine relativ geringe Breite haben, so daß auch hierdurch sichergestellt ist, daß keine zu großen Außenwand-Bereiche am Innenrohr geschaffen werden, in denen sich das Innenrohr nicht gegen die Innenwand des Außenrohres abstützen kann. Durch Anspruch 7 wird in diesem Zusammenhang klargestellt, daß die zwischen benachbarten Kanälen verbleibenden Stege ausreichend breit sind und eine ausreichende Abstützung gegen die Innenwand des Rohres gewährleisten.

Die Ausbildung der Kanäle kann insgesamt nach Anspruch 8 erfolgen.

Aus der DE-A-31 o2 276 ist eine längenverstellbare Gasfeder bekannt, die ein Außenrohr und einen in diesem befindlichen inneren Hohlkörper aufweist. In dem Hohlkörper ist ein mit einer Dichtung abgedichtet an der Innenwand des Hohlkörpers anliegender Kolben verschiebbar angeordnet, an dem eine Kolbenstange angebracht ist, die aus einem Ende abgedichtet herausgeführt ist. Am anderen Ende ist ein Ventil angeordnet. In der Außenwand des Hohlkörpers sind zwei Nuten ausgebildet, in denen Rohre angeordnet sind, die einerseits abgedichtet in das Ventil und andererseits abgedichtet in den Innenraum des Hohlkörpers im Bereich des Kolbenstangenaustritts hineingeführt sind. Hiermit soll erreicht werden, daß die Gasfeder im wesentlichen aus einem einzigen Körper besteht, nämlich dem inneren Hohlkörper, mit dem das Ventil einerseits und das kolbenstangenaustrittsseitige Ende andererseits einstückig ausgebildet ist. Das Außenrohr dient hierbei nur als Mittel zur Herstellung der Verbindung mit dem abzustützenden Stuhl, Tisch od.dgl. Demgegenüber geht die Erfindung nach wie vor davon aus, daß - wie bei den gattungsbildenden längenverstellbaren Gasfedern - die gesamte Gasfeder wesentlich durch das Außenrohr umgrenzt und gestützt und axial zusammengehalten wird.

Weitere Vorteile, Merkmale und Einzelheiten der Erfindung ergeben sich aus der nachfolgenden Beschreibung eines Ausführungsbeispieles anhand der Zeichnung. Es zeigt
- Fig. 1: einen Längsschnitt durch eine Gasfeder nach der Erfindung und
- Fig. 2: einen Querschnitt durch die Gasfeder gemäß der Schnittlinie II-II in Fig. 1.

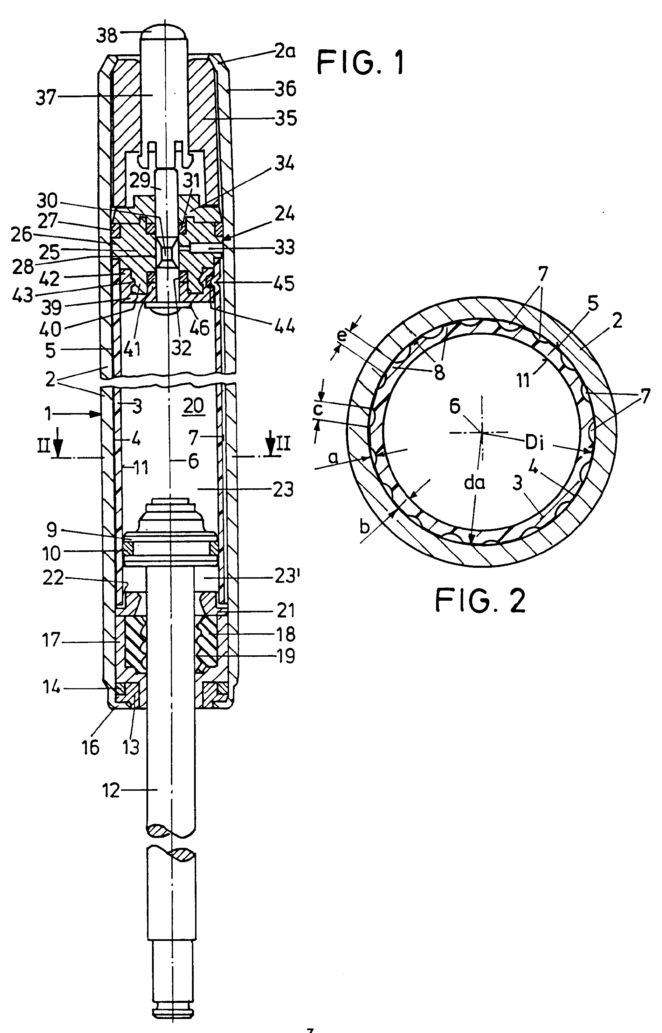

Die in Fig. 1 dargestellte längenverstellbare Gasfeder weist ein Gehäuse 1 auf, das zwei konzentrisch ineinander angeordnete Rohre mit unterschiedlichem Durchmesser, nämlich ein Außenrohr 2 und ein Innenrohr 3 aufweist. Beide Rohre 2,3 sind in dem Bereich, über den sich das Innenrohr 3 erstreckt, zylindrisch ausgebildet. Das Innenrohr 3 liegt mit seiner Außenwand 4 an der Innenwand 5 des Außenrohres 2 an, d.h. der Außendurchmesser da des Innenrohres 3 entspricht im wesentlichen dem Innendurchmesser Di des Außenrohres 2. Das Innenrohr 3 weist in seiner Außenwand 4 sich parallel zur gemeinsamen Mittel-Längs- Achse 6 des Gehäuses 1 erstreckende nutartige Kanäle 7 auf, die zur Innenwand 5 des Außenrohres 2 hin offen sind und somit von dieser Innenwand 5 her nach außen begrenzt werden. Es sind eine Vielzahl derartiger Kanäle 7 parallel zueinander angeordnet, die also längs Mantellinien des zylindrischen Innenrohres 3 verlaufen. Wie Fig. 2 entnehmbar ist, gilt für die radiale Tiefe a der Kanäle 7, also deren Tiefe in Richtung auf die Achse 6 hin im Verhältnis zur Wanddicke b des Innenrohres 3 o,15 b **<** a **<** o,25 b. Für die Breite c der Kanäle 7 in Umfangsrichtung des Rohres 3 gilt im Verhältnis zur Wanddicke b o,5 b **<** c **<** o,8 b. Schließlich gilt für den Abstand e benachbarter Kanäle im Vergleich zu ihrer Breite c zueinander o,8 c **<** e. Die Breite c der Kanäle 7 ist immer in der Außenwand 4 Innenrohres 3 definiert. Für die Wanddicke b des Innenrohres 3 im Vergleich zu dessen Außendurchmesser da gilt im übrigen o,o5 da **<** b **<** o,1 da.

Während das Außenrohr 2 aus Stahl besteht, besteht das Innenrohr 3 aus Kunststoff. Es muß nicht straff im Außenrohr 2 angeordnet sein, so daß benachbarte Kanäle 7 gegeneinander abgedichtet sind; es kann aber so im Außenrohr 2 geführt sein, daß es rundum radial in diesem abgestützt ist, wobei die Stege 8 zwischen benachbarten Kanälen 7 sich gegen die Innenwand 5 des Außenrohres 2 abstützen.

Die nutartigen Kanäle 7 bilden insgesamt einen Gasüberströmraum.

In dem Innenrohr 3 ist ein etwa ringförmiger Kolben 9 axial verschiebbar angeordnet, der über einen Dichtungsring 1o gasdicht mit seinem Außenumfang gegenüber der Innenwand 11 des Innenrohres 3 abgedichtet ist. Der Kolben 9 ist an einem Ende einer koaxial zur Achse 6 geführten Kolbenstangen 12 befestigt. Diese Kolbenstange 12 ist aus einem Ende des Gehäuses 1 herausgeführt. An diesem Ende ist das Gehäuse 1 durch einen Abschlußring 13 verschlossen, der an seinem Außenumfang mittels einer Ringdichtung 14 gegenüber der Innenwand 5 des Außenrohres 2 abgedichtet ist. Der Abschlußring 13 ist durch eine Umbördelung 16 des Außenrohres 2 axial nach außen gehalten. Auf der Innenseite liegt gegen den Abschlußring 13 eine topfförmige Hülse 17 an, die eine Mehrfach-Lippen-Dichtung 18 aufnimmt, die mit ihren Dichtlippen 19 dichtend gegen die Kolbenstange 12 anliegt. Dadurch wird ein Gasaustritt entlang der Oberfläche der Kolbenstange 12 nach außen unterbunden.

Gegen die Hülse 17 stützt sich vom Innenraum 2o des Gehäuses 1 eine an der Innenwand 5 des Außenrohres 2 zentriert anliegende Distanzhülse 21 ab, auf die das Innenrohr 3 aufgeschoben ist. Zwischen dieser Distanzhülse 21 und dem Innenrohr 3 sind ein oder mehrere Überströmkanäle 22 ausgebildet, die die Kanäle 7 - und zwar alle Kanäle 7 - mit dem zwischen dem Kolben 9 und der Dichtung 18 im Innenrohr 3 begrenzten Teil-Gehäuseraum 23 verbinden. Die Distanzhülse 21 liegt axial nicht nur gegen die Hülse 17 sondern auch gegen die Dichtung 18 an, so daß diese in der Hülse 17 in ihrer in der Zeichnung dargestellten Position in Richtung der Achse 6 gehalten wird.

An dem dem Kolbenstangenaustritt entgegengesetzten Ende des Gehäuses ist ein Ventil 24 angeordnet, mittels dessen der im Innenrohr 3 zwischen dem Kolben 9 und dem Ventil 24 befindliche Teil-Gehäuseraum 23′ über die Kanäle 7 mit dem anderen Teil-Gehäuseraum 23 verbunden bzw. von diesem getrennt werden kann.

Das Ventil 24 weist einen Ventilkörper 25 auf, der einen gegen die Innenwand 5 des Außenrohres 2 anliegenden zylindrischen Abschnitt 26 aufweist. In diesem Bereich ist auch eine gegen die Innenwand 5 abdichtende Dichtung 27 vorgesehen. In dem Ventilkörper 25 ist eine koaxial zur Achse 6 verlaufende zylindrische Ausnehmung 28 ausgebildet, in der ein Ventil-Betätigungsstift 29 axial verschiebbar angeordnet ist. Dieser Ventil-Betätigungsstift 29 ist im wesentlichen zylindrisch ausgebildet und weist in seinem mittleren Bereich einen verjüngten Abschnitt 3o auf. Dieser verjüngte Abschnitt 3o befindet sich in der in Fig. 1 dargestellten Ruhelage des Betätigungsstiftes 29, in der das Ventil 24 geschlossen ist, zwischen zwei Dichtungen 31,32, die am zylindrischen Teil des Betätigungsstiftes 29 beiderseits dieses Abschnittes 3o anliegen. Zwischen diesen Dichtungen 31,32 mündet ein etwa radial zur Achse 6 verlaufender Verbindungskanal 33 in den Bereich des verjüngten Abschnittes 3o ein, der wiederum im Bereich der Innenwand 5 des Außenrohres 2 an die Kanäle 7 angeschlossen ist.

Die Dichtung 27 und die Dichtung 31 werden axial nach außen durch einen auf ihnen aufliegenden Deckelabschnitt 34 gehalten, der ebenfalls von dem Betätigungsstift 29 durchsetzt ist. Gegen den Deckelabschnitt 34 liegt wiederum ein konisches, also sich nach außen hin kegelstumpfförmig verjüngendes Füllstück 35 an, gegen das der zugeordnete Wandbereich des Außenrohres 2 angeformt ist, so daß das Außenrohr 2 hier einen konischen Befestigungsabschnitt 36 bildet, mittels dessen die Gasfeder in einem entsprechend angepaßten konischen Aufnahmeabschnitt an einem Stuhl, Tisch od.dgl. durch einfaches Eindrücken befestigt werden kann. Das Außenrohr 2 ist durch eine Anbördelung 2a am Füllstück 35 axial festgelegt. Im Füllstück 35 ist ein Betätigungs-Schieber 37 axial verschiebbar angeordnet, der gegen das zugeordnete äußere Ende des Betätigungsstiftes 29 anliegt, so daß letzterer von dem äußeren nach Art eines Betätigungsknopfes 38 ausgebildeten Ende des Schiebers 37 her betätigt werden kann.

Die dem Teil-Gehäuseraum 23 zugewandte Dichtung 32 ist durch einen hülsenförmigen Deckel 39 gehalten, der auf einen Zentrierbund 4o des Ventilkörpers 25 aufgesetzt ist. Der Deckel 39 weist einen inneren, die Dichtung 32 haltenden Ringsteg 41 auf, der auch mit der Ausnehmung 28 fluchtet und einen Teil des Betätigungsstiftes 29 aufnimmt und führt. Der Deckel 39 weist weiterhin einen äußeren, den Zentrierbund 4o umgreifenden Ringsteg 42 auf, der dicht gegen die Innenwand 11 des Innenrohres 3 anliegt. Dieser äußere Ringsteg 42 ist durch eine Verriegelung 43 mit dem Ventilkörper 25 verbunden, wodurch der gesamte Deckel 39 fest mit dem Ventilkörper 25 verbunden ist. Da der Ventilkörper 25 und insbesondere der hülsenförmigen Deckel 39 aus einem plastisch verformbaren Kunststoff bestehen, kann die dargestellte Verriegelung 43 durch warmplastische Verformung des Deckels 39 hergestellt werden. Im äußeren Ringsteg 42 ist eine Dichtung 44 angeordnet, die gegen die Innenwand 11 des Innenrohres 3 abdichtet. In diesem Bereich ist das aus thermoplastischem Kunststoff bestehende Innenrohr 3 mit einer nach innen gerichteten Sicke 45 versehen, die zum einen die notwendige Anpreßkraft gegen die Dichtung 44 herstellt und die darüber hinaus das Innenrohr 3 axial fest mit dem Ventilkörper verbindet.

Der Ventil-Betätigungsstift 29 weist an seinem im Teil-Gehäuseraum 23 liegenden Ende einen Anschlagteller 46 auf, mittels dessen er gegen ein Herausschieben aus dem Gehäuse 1 heraus gesichert ist. Der gesamte Innenraum 2o des Gehäuses 1 ist mit Druckgas und gegebenenfalls einer kleinen Menge Öl zu Schmierzwecken gefüllt. Die Wirkungsweise der längenverstellbaren Gasfeder ist wie üblich. Wenn das Ventil 24 geschlossen ist, was bei der dargestellten Stellung des Betätigungsstiftes 29 der Fall ist, dann befindet sich der Kolben 9 und damit die Kolbenstange 12 in einer eingestellten Ruhelage und federt gegen die in den Teil-Gehäuseräumen 23,23′ befindliche Druckgasfüllung. Wenn der Betätigungsstift 29 durch entsprechende Betätigung des Schiebers 37 in Richtung auf den Teil-Gehäuseraum 23 verschoben wird, dann überbrückt der verjüngte Abschnitt 3o des Betätigungsstiftes 29 die Dichtung 32, so daß Druckgas vom Teil-Gehäuseraum 23, durch die Ausnehmung 28, den Verbindungskanal 33, die Kanäle 7 und den oder die Überströmkanäle 22 in den anderen Teil-Gehäuseraum 23′ fließen kann. Dies ist der Fall, wenn bei geöffnetem Ventil 24 die Kolbenstange 12 mit einer ausreichend großen Kraft in das Gehäuse 1 eingeschoben wird. Wenn dagegen bei geöffnetem Ventil 24 keine oder nur eine sehr geringe Kraft auf die Kolbenstange 12 ausgeübt wird, dann wird die Kolbenstange 12 mit dem Kolben 9 aus dem Gehäuse 1 herausgeschoben mit der Folge, daß das Gas in umgekehrter Richtung fließt. Wenn in einer neuen relativen Längeneinstellung von Kolbenstange 12 mit Kolben 9 zum Gehäuse 1 das Ventil 24 durch Loslassen des Betätigungsstiftes 29 geschlossen wird, dann ist eine neue Längeneinstellung der Gasfeder erreicht.

Das Innenrohr 3 besteht aus Kunststoff, und zwar bevorzugt aus einem Polyamid oder einem Acetalharz. Diese Kunststoffe zeichnen sich durch besonders glatte Oberflächen mit geringer Rauhtiefe aus, die erheblich geringer sind als bei nahtlos gezogenen Stahlrohren. Während die Rauhtiefe eines nahtlos gezogenen Stahlrohres zwischen o,5 und 2 µm aufweist, liegt diese bei einem extrudierten oder gespritzten Kunststoffrohr deutlich unter o,5 µm. Außerdem ist das Kunststoffrohr im Vergleich zu einem Stahlrohr leichter und ist kostengünstiger herzustellen.

Wie die vorstehende Beschreibung zeigt, hält das Außenrohr 2 das gesamte Gehäuse 1 der Gasfeder zusammen.

## Patentansprüche

1. Längenverstellbare Gasfeder, mit zwei einander konzentrisch umschließenden, zwischen sich einen Überströmraum begrenzenden und zumindest teilweise mit einem Druckgas gefüllten Rohren (2,3), mit einem in dem Innenrohr (3) gleitend angeordneten und an dessen Innenwand (11) mit einer Dichtung (1o) anliegenden, den Innenraum (2o) des Innenrohres (3) in zwei Teil-Gehäuseräume (23,23′) trennenden Kolben (9), der mit einer zu einem Rohrende hin abgedichtet nach außen herausgeführten Kolbenstange (12) verbunden ist, mit mindestens einem den Überströmraum und den zugeordneten Teil-Gehäuseraum (23′) im Bereich des Kolbenstangenaustritts verbindenden Überströmkanal (22), mit einem die Rohre (2,3) am entgegengesetzten Ende nach außen abschließenden und den Überströmraum mit dem anderen Teil-Gehäuseraum (23) verbindenden Ventil (24), wobei das Ventil (24) einen Ventilkörper (25) aufweist, gegen den das Innenrohr (3) sich axial und radial abstützt, dadurch gekennzeichnet, daß das Innenrohr (3) aus Kunststoff besteht, in dessen Außenwand (4) mehrere einen Freiraum bildende, nutartige Kanäle (7) ausgebildet sind.

2. Gasfeder nach Anspruch 1, dadurch gekennzeichnet, daß das Innenrohr (3) sich über zwischen benachbarten Kanälen (7) befindliche Stege (8) gegen die Innenwand (5) des Außenrohres (2) radial abstützt.

3. Gasfeder nach Anspruch 1 oder 2, dadurch gekennzeichnet, daß die Kanäle (7) durch die Innenwand (5) des Außenrohres (2) abgedeckt sind.

4. Gasfeder nach einem der Ansprüche 1 bis 3, dadurch gekennzeichnet, daß für die Wanddicke (b) des Innenrohres (3) im Vergleich zu seinem Außendurchmesser (da) gilt: o,o5 da **<** b **<** o,1 da.

5. Gasfeder nach einem der Ansprüche 1 bis 4, dadurch gekennzeichnet, daß für die Tiefe (a) der Kanäle (7) im Vergleich zur Wanddicke (b) des Innenrohres (3) gilt: o,15 b **<** a **<** o,25 b.

6. Gasfeder nach einem der Ansprüche 1 bis 5, dadurch gekennzeichnet, daß für die Breite (c) der Kanäle (7) im Vergleich zur Wanddicke (b) des Innenrohres (3) gilt: o,5 b **<** c **<** o,8 b.

7. Gasfeder nach einem der Ansprüche 1 bis 6, dadurch gekennzeichnet, daß für den Abstand (e) benachbarter Kanäle (7) im Vergleich zur Breite (c) der Kanäle (7) gilt: o,8 c **<** e.

8. Gasfeder nach einem der Ansprüche 1 bis 3, dadurch gekennzeichnet, daß das Innenrohr (3) im Bereich seiner Außenwand (4) mit einer parallel zu seiner Mittel-Längs-Achse (6) verlaufenden Rändelung versehen ist.

## Claims

1. A longitudinally adjustable gas spring comprising two tubes (2, 3) at least partially filled with a compressed gas, which enclose one another concentrically and define between them a relief chamber, a piston (9) slidably arranged in the inner tube (3) and bearing against its internal wall (11) with a seal (10) and dividing the inner chamber (20) of the inner tube (3) into two partial housing chambers (23, 23′), which piston (9) is connected with a piston rod (12) guided in a sealed manner outwards towards one tube end, at least one relief channel (22) connecting the relief chamber and the associated partial housing chamber (23′) in the vicinity of where the piston rod exits, a valve (24) closing the tubes (2, 3) outwards at the opposite end and connecting the relief chamber with the other partial housing chamber(23), the valve (24) having a valve body (25) against which the inner tube (3) bears axially and radially, characterized in that the inner tube (3) consists of a plastics material, in the external wall (4) of which several groove-like channels (7) are provided forming a free space.

2. A gas spring according to claim 1, characterized in that the inner tube (3) radially bears against the internal wall (5) of the outer tube (2) by way of webs (8) located between adjacent channels (7).

3. A gas spring according to claim 1 or 2, characterized in that the channels (7) are covered by the internal wall (5) of the outer tube (2).

4. A gas spring according to one of the claims 1 to 3, characterized in that 0.05 da < b < 0.1 da applies to wall thickness (b) of the inner tube (3) in relation to its outside diameter (da).

5. A gas spring according to one of the claims 1 to 4, characterized in that 0.15 b < a < 0.25 b applies to the depth (a) of the channels (7) in relation to the wall thickness (b) of the inner tube (3).

6. A gas spring according to one of the claims 1 to 5, characterized in that 0.5 b < c < 0.8 b applies to the width (c) of the channels (7) in relation to the wall thickness (b) of the inner tube (3).

7. A gas spring according to one of the claims 1 to 6, characterized in that 0.8 c < e is valid for the distance (e) of adjacent channels (7) in relation to the width (c) of the channels (7).

8. A gas spring according to one of the claims 1 to 3, characterized in that in the vicinity of its external wall (4) the inner tube (3) is provided with a knurling extending parallel to its central longitudinal axis (6).

## Revendications

1. Ressort pneumatique de longueur réglable, avec deux tubes (2, 3) disposés l'un dans l'autre de manière concentrique, délimitant entre eux un espace de circulation et remplis au moins partiellement d'un gaz comprimé, avec un piston (9) qui est disposé avec possibilité de glissement dans le tube intérieur (3), qui est adjacent à la paroi intérieure (11) de celui-ci par une garniture (10) qui divise l'espace intérieur (20) du tube intérieur (3) en deux espaces partiels de boîtier (23, 23′), qui est relié à une tige de piston (12) sortant de manière étanche vis-à-vis d'une extrémité de tube, avec au moins un canal de circulation (22) reliant l'espace de circulation et l'espace partiel de boîtier (23′) correspondant dans le secteur de la sortie de la tige de piston, une soupape (24) fermant les tubes (2, 3) vis-à-vis de l'extérieur à l'extrémité opposée et reliant l'espace de circulation avec l'autre espace partiel de boîtier (23), la soupape (24) présentant un corps de soupape (25) contre lequel le tube intérieur (3) s'appuie dans le sens axial et radial, caractérisé en ce que le tube intérieur (3) est en plastique, dans la paroi extérieure (4) duquel sont formés plusieurs canaux (7) en forme de rainure formant un espace libre.

2. Ressort pneumatique selon la revendication 1, caractérisé en ce que le tube intérieur (3) s'appuie dans le sens radial contre la paroi intérieure (5) du tube extérieur (2) par-dessus des nervures (8) se trouvant entre des canaux (7) voisins.

3. Ressort pneumatique selon la revendication 1 ou 2, caractérisé en ce que les canaux (7) sont couverts par la paroi intérieure (5) du tube extérieur (2).

4. Ressort pneumatique selon l'une des revendications 1 à 3, caractérisé en ce que l'épaisseur de paroi (b) du tube intérieur (3), exprimée par rapport à son diamètre extérieur (da) a pour valeur : 0,05 da < b < 0,1 da.

5. Ressort pneumatique selon l'une des revendications 1 à 4, caractérisé en ce que la profondeur (a) des canaux (7) exprimée par rapport à l'épaisseur de paroi (b) du tube intérieur (3) a pour valeur : 0,15 b < a < 0,25 b.

6. Ressort pneumatique selon l'une des revendications 1 à 5, caractérisé en ce que la largeur (c) des canaux (7) exprimée par rapport à l'épaisseur de paroi (b) du tube intérieur (3) a pour valeur : 0,5 b < c < 0,8 b.

7. Ressort pneumatique selon l'une des revendications 1 à 6, caractérisé en ce que l'écart (e) de canaux (7) voisins exprimé par rapport à la largeur (c) des canaux (7) a pour valeur : 0,8 c < e.

8. Ressort pneumatique selon l'une des revendications 1 à 3, caractérisé en ce que le tube intérieur (3) est pourvu dans le secteur de sa paroi extérieure (4) d'un moletage parallèle à son axe longitudinal médian (6).
